# EUROPEAN PATENT SPECIFICATION

(11) **EP 0 311 326 B1**
(45) Date of publication and mention of the grant of the patent: **22.09.1993**
(21) Application number: 88309164.7
(22) Date of filing: 03.10.1988
(51) Int. Cl.: B21D 28/04, B21D 28/26, B23Q 17/24, B21D 28/16

(54) **Precision punching apparatus**
Feinstanzvorrichtung
Appareil de poinçonnage de précision

(30) Priority: 07.10.1987 JP 251693/87
(43) Date of publication of application: 12.04.1989
(73) Proprietor: NIKKA ENGINEERING COMPANY LIMITED, Asaka-shi Saitama Prefecture (JP)
(72) Inventor: Kinoshita, Kaoru, Kawagoe-shi Saitama Prefecture (JP)
(74) Representative: Valentine, Francis Anthony Brinsley

(56) References cited:
- DE-A- 2 135 817
- DE-A- 2 606 378
- DE-A- 2 622 355
- DE-A- 3 208 989
- DE-A- 3 420 512
- DE-C- 316 055
- DE-C- 331 879
- FR-A- 2 097 868
- GB-A- 2 045 652
- US-A- 3 368 436
- TOOLING & PUBLICATION, vol. 43, no. 11, February 1978, page 80; "Optical control makes a better punch press"

## Description

The present invention relates to precision punching apparatus that can punch a central portion of a workpiece of material marked by a reference line or reference points with very high accuracy.

In conventional punching apparatus, the punching operation is done by first determining the position of the centre of the workpiece portion to be punched on x and y coordinates on the material, converting it into X and Y coordinate values for the punching apparatus to determine the exact position at which the material is to be punched, and moving the centre of the workpiece to the position of the die on the X and Y coordinates that was determined in advance.

Such conventional punching apparatus or press has many factors leading to errors in the punching operation, such as (1) errors that occur when measuring the position of the workpiece punching centre in the x and y coordinates, (2) errors when setting and securing the material in position in the punching apparatus, i.e., the errors that arise from the deviation between the x-y coordinate system and the X-Y coordinate system, and (3) errors that occur when the position of the die is measured on the X-Y coordinates. Because of these errors, it is difficult for conventional apparatus to perform precision punching operations that require a very high accuracy of the order of several microns to some dozen microns.

The object of this invention is accordingly to provide punching apparatus that can eliminate such error factors and punch the centre of the material with very high accuracy.

DE-C-331879 discloses a precision punching apparatus according to the pre-characterising part of claim 1 comprising coaxial upper and lower dies and a visual alignment means for checking the alignment of a marked workpiece with the dies. The alignment method disclosed comprises marking the punching centre on the workpiece and then aligning the workpiece centre mark with an oblique light beam which illuminates the desired location of the workpiece centre mark.

The precision punching apparatus according to the invention is characterised in that in addition to the features of the first part of claim 1 a turntable is rotatably mounted on the lower die base and has the lower die secured to its central position; a movable table is mounted for adjustment in two directions on the turntable and has holding means for a workpiece, and the visual alignment means comprises a microscope for monitoring markings on a workpiece, the microscope axis being spaced from the axis of the lower die.

A punching operation then consists in: putting the material to be punched on the movable table; rotating the turntable and checking for any centre deviation of the circular reference line (or three or more reference points) on the material with respect to the turntable centre by means of the microscope, moving the movable table until there is no centre deviation of the reference line, and then punching the material.

Since the reference line on the material is directly monitored and its centre is moved to the centre of the turntable, there is no need at all to measure the positions of the reference line centre and the die on the coordinates as is required with conventional apparatus and therefore no error occurs when material is set in place in the apparatus. Also, no errors will occur as long as the axis of rotation of the turntable coincides with the centre of the die. Since the lower die is rigidly secured to the turntable, their centres can be aligned with high accuracy, enabling a highly precise punching operation.

If the upper die is made rotatable with the lower die, it is possible to punch out different shapes of holes.

The invention will now be further described by way of example with reference to the drawings, in which:

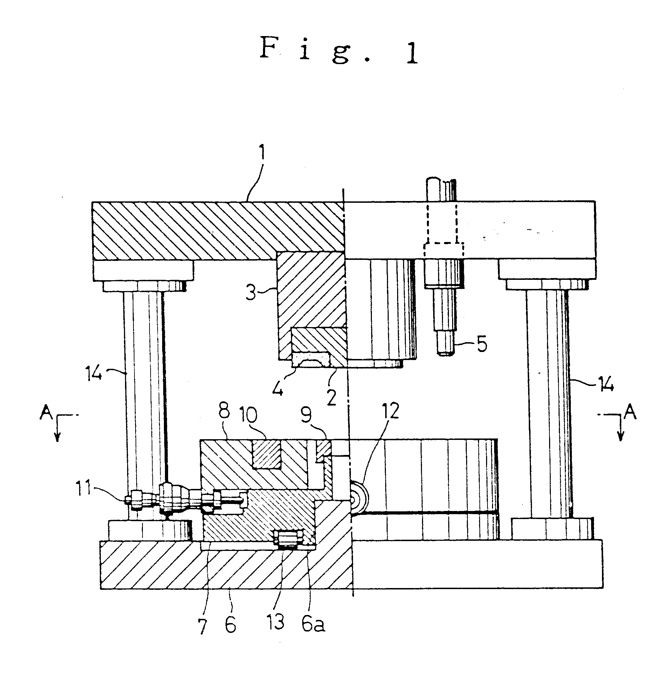

Figure 1 is a partially sectioned side view;

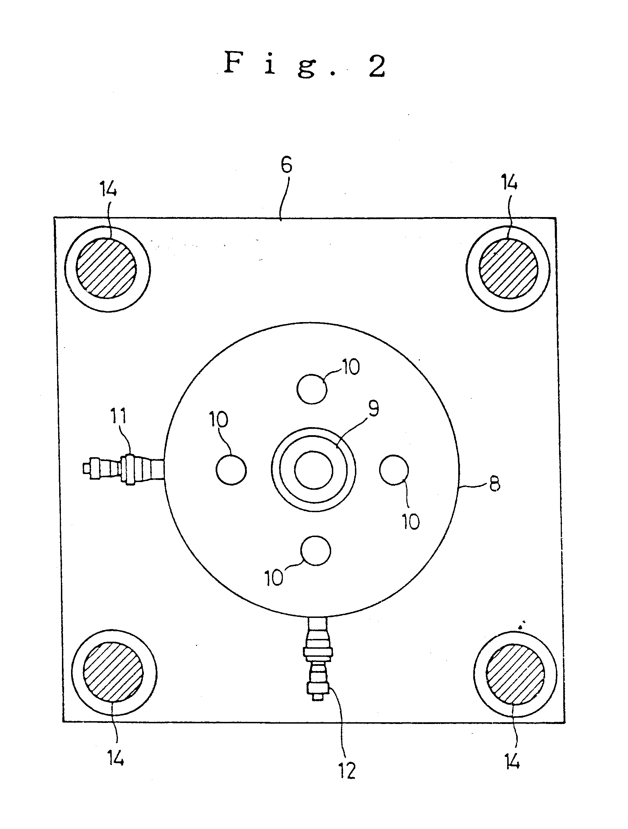

Figure 2 is a horizontal sectional view taken along the line A-A of figure 1;
Figure 3 shows in vertical section a blank or the material being punched; and
Figure 4 is a plan view of the material to be punched.

The present embodiment employs a lower ram hydraulic press. But the press may be of a water pressure type or mechanical type. The press may also employ the upper ram type in which the upper ram is driven.

An upper die base 1 and a lower die base 6 are interconnected by four guide posts 14 to form a die assembly. The press could instead be of an ordinary type without the guide posts. The lower die base 6 is connected to a hydraulic cylinder (not shown) and is driven by it up and down the guide posts. The upper die base 1 is secured to the guide posts 14. An upper die 2 is secured to the upper die base 1 through an upper die mount 3. A holder pad 4 made of soft material to hold and protect the blank or the material to be sheared during the punching process is fitted around the rim of the upper die 2. A microscope 5 extends through the upper die base 1 as a reference monitor means and is made movable vertically for focusing and diametrically for checking the reference line. The image observed through the microscope 5 is displayed on a monitor cathode ray tube CRT, (not shown). It is also possible to check the reference line directly through the microscope 5 with the naked eye. The microscope can also be set in the upper die 2 by passing it through the upper die base 1, the upper die mount 3 and into the upper die 2. An appropriate magnifying power for the microscope is around 400 to 500.

Formed at the centre of the lower die base 6 is a shaft 6a on which a turntable 7 is mounted by thrust bearings 13 so that it is smoothly rotatable. At the centre of the turntable 7 is secured a lower die 9 which is concentric with and opposite to the upper die 2. That is, the axes of the rotating shaft of the turntable 7 and of the lower die 9 coincide. Mounted on the turntable 7 is a sliding movable table 8 which is adjustable in the X and Y directions by respective micrometers 11,12 with respect to the turntable 7. The movable table 8 has electromagnets 10 secured thereto to hold the blank. Among a variety of possible means of holding the blank, the electromagnet is most desirable as it is simple and produces the least impact in securing the material. A means using vacuum suction is also available.

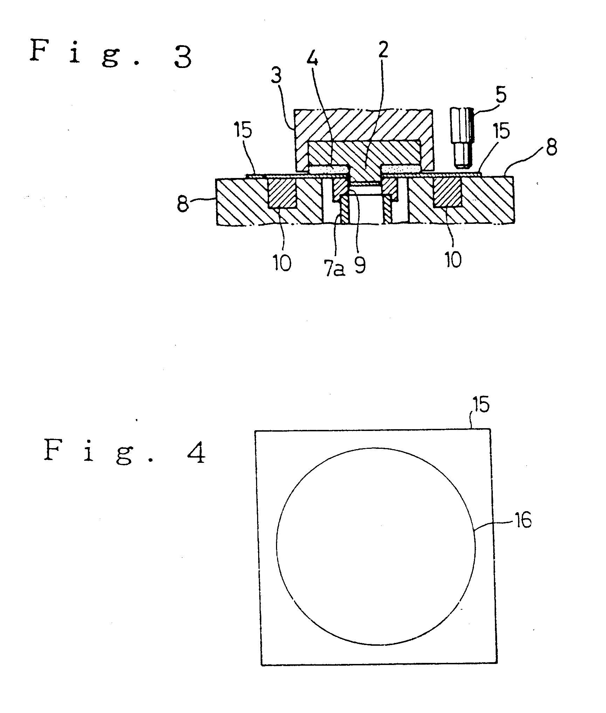

In figure 4, when the central portion of the blank 15 marked by the reference line 16 is to be punched out, the blank is placed on the movable table 8 with its centre as closely aligned with the centre of the table 8 as possible and the electromagnet 10 is energized to securely hold the blank 15. The turntable 7 is then rotated to check for any centre deviation of the circular reference line 16 on the blank 15 from the centre of the lower die 9 through the monitor CRT of the microscope 5. The movable table 8 is adjusted relative to the turntable 7 by operating the micrometers 11,12 and when there is no positional deviation of the reference line with respect to the die centre, the lower die base 6 is raised to punch the material. The blank 15 may have three or more reference points arranged in circle rather than the above-mentioned circular reference line.

When in this embodiment the upper and lower dies are to be aligned, the upper die mount 3 is lightly fastened to the upper die base 1 and the lower die base 6 is raised until the upper and lower dies 2,9 are lightly engaged. In this condition the lower die 9 is turned. Usually, between the upper and the lower dies there is a clearance of around 20 microns, so that simply bringing these dies into engagement does not prevent the upper die from deviating from the the correct position. However, turning the lower die which is engaged with the upper die brings the upper die to the exact centre of the lower die. The upper die is then tightly fastened by bolts to rigidly secure the upper die mount 3 to the upper die base 1. With the dies perfectly aligned, the errors of a punched hole in the blank in terms of size, shape and centre deviation are very small.

The embodiment of the apparatus of this invention has very few factors contributing to errors in the punching operation and thus can ensure punching of the central portion of the blank with high precision. The upper and lower dies are accurately aligned by turning the lower die with the upper and lower dies slightly engaged. This further improves the accuracy of the apparatus.

## Claims

1. Precision punching apparatus comprising an upper die (2) secured face down to an upper die base (1,3), a lower die (9) coaxial with and opposite to the upper die (2) and a visual alignment means for checking the alignment of a marked workpiece (15) with the dies, characterised in that: a turntable (7) is rotatably mounted on the lower die base (6) and has the lower die (9) secured to its central position; a movable table (8) is mounted for adjustment in two directions (X,Y) on the turntable (7) and has holding means (10) for a workpiece (15); and the visual alignment means comprises a microscope (5) for monitoring markings on a workpiece (15), the microscope axis being spaced from the axis of the lower die (9).

2. Precision punching apparatus according to claim 1, characterised in that the holding means provided on the movable table (8) is an electromagnet (10).

3. Precision punching apparatus according to claim 1, characterised in that the holding means provided on the movable table (8) is a vacuum suction device.

4. Precision punching apparatus according to any of claims 1 to 3, characterised in that the upper die (2) is rotatable with the lower die (9).

5. A method of punching a workpiece blank (15) using the apparatus defined in any of claims 1 to 4, characterised by the steps of; marking the workpiece (15) with at least three reference points equidistant from the position of the axis of the desired punching location, or a circle (16) centred on the said axis; placing the workpiece (15) on the movable table (8); rotating the turntable (7) and checking for any centre deviation of the workpiece reference points or circle with respect to the turntable axis using the microscope (5); adjusting the position of the movable table (8) until there is no deviation of the reference points or circle (16) with respect to the turntable axis, and punching the workpiece (15).

## Patentansprüche

1. Feinstanzvorrichtung, aufweisend ein Oberwerkzeug (2), das mit der Vorderseite nach unten an einem Bett (1, 3) für das Oberwerkzeug befestigt ist, ein Unterwerkzeug (9) koaxial bezüglich und gegenüberliegend dem Oberwerkzeug (2) und eine visuelle Ausrichtungseinrichtung zur Überprüfung der Ausrichtung eines markierten Werkstücks (15) mit den Werkzeugen,
**dadurch gekennzeichnet,**
daß: ein Drehtisch (7) drehbar am Bett (6) des Unterwerkzeugs angebracht ist und das Unterwerkzeug (9) an seiner Mittenposition befestigt ist; ein bewegbarer Tisch (8) zur Justierung in zwei Richtungen (X, Y) auf dem Drehtisch (7) angebracht ist und eine Halteeinrichtung (10) für ein Werkstück (15) aufweist; und daß die visuelle Ausrichtungseinrichtung ein Mikroskop (5) zur Beobachtung von Markierungen auf einem Werkstück (15) aufweist, wobei die Mikroskopachse von der Achse des Unterwerkzeugs (9) beabstandet ist.

2. Feinstanzvorrichtung nach Anspruch 1,
**dadurch gekennzeichnet,**
daß die Halteeinrichtung, die auf dem bewegbaren Tisch (8) vorgesehen ist, ein Elektromagnet (10) ist.

3. Feinstanzvorrichtung nach Anspruch 1,
**dadurch gekennzeichnet,**
daß die Halteeinrichtung, die auf dem bewegbaren Tisch (8) vorgesehen ist, eine Vakuum-Saugvorrichtung ist.

4. Feinstanzvorrichtung nach einem der Ansprüche 1 bis 3,
**dadurch gekennzeichnet,**
daß das Oberwerkzeug (2) mit dem Unterwerkzeug (9) drehbar ist.

5. Verfahren zum Stanzen eines Werkstückrohlings (15) unter Verwendung der in einem der Ansprüche 1 bis 4 definierten Vorrichtung,
**gekennzeichnet durch**
die Schritte: Markieren des Werkstücks (15) mit zumindest drei von der Position der Achse der gewünschten Stanzstelle äquidistanten Bezugspunkten oder einem Kreis (16), der auf der Achse zentriert ist; Plazieren des Werkstücks (15) auf dem bewegbaren Tisch (8); Drehen des Drehtisches (7) und Überprüfung hinsichtlich jedweder Mittenabweichung der Werkzeugbezugspunkte oder des Kreises bezüglich der Drehtischachse unter Verwendung des Mikroskops (5); Justieren der Position des bewegbaren Tischs (8), bis keine Abweichung der Bezugspunkte oder des Kreises (16) bezüglich der Drehtischachse vorliegt, und Stanzen des Werkstücks (15).

## Revendications

1. Dispositif de poinçonnage de précision comportant une matrice supérieure (2) fixée sur une base (1, 3) pour matrice supérieure en ayant une face dirigée vers le bas, une matrice inférieure (9) coaxiale à la matrice supérieure (2) et en vis à vis de cette dernière et des moyens visuels d'alignement pour contrôler l'alignement d'une pièce à usiner (15) marquée à l'aide des matrices et munie de repères, caractérisé en ce qu'une table tournante (7) est montée de manière rotative sur la base (6) pour matrice inférieure et comporte la matrice inférieure (9) fixée en position centrale; une table mobile (8) étant montée sur la table tournante (7) pour assurer le réglage dans deux directions (X, Y) et comportant des moyens de retenue (10) d'une pièce à usiner (15); et en ce que les moyens visuels d'alignement comportent un microscope (5) pour surveiller les repères situés sur une pièce à usiner (15), l'axe du microscope étant écarté de l'axe de la matrice inférieure (9).

2. Dispositif de poinçonnage de précision selon la revendication 1, caractérisé en ce que les moyens de retenue prévus sur la table mobile (8) sont constitués d'un électroaimant (10).

3. Dispositif de poinçonnage de précision selon la revendication 1, caractérisé en ce que les moyens de retenue prévus sur la table mobile (8) sont constitués d'un dispositif de succion à vide.

4. Dispositif de poinçonnage de précision selon l'une quelconque des revendications 1 à 3, caractérisé en ce que la matrice supérieure (2) peut être mise en rotation avec la matrice inférieure (9).

5. Procédé de poinçonnage d'une ébauche (15) de pièce à usiner en utilisant le dispositif selon l'une quelconque des revendications 1 à 4, caractérisé en ce qu'il comporte les étapes consistant à : marquer la pièce à usiner (15) avec au moins trois points de référence équidistants par rapport à la position de l'axe de l'emplacement du poinçonnage voulu, ou un cercle (16) centré sur ledit axe; placer la pièce à usiner (15) sur la table mobile (8); faire tourner la table tournante (7) et contrôler toute déviation axiale des points de référence de la pièce à usiner ou du cercle de référence par rapport à l'axe de la table tournante en utilisant le microscope (5); régler la position de la table mobile (8) jusqu'à ce qu'il n'y ait aucune déviation des points ou du cercle (16) de référence par rapport à l'axe de la table tournante, et poinçonner la pièce à usiner (15).
